# EUROPÄISCHE PATENTANMELDUNG

(11) **EP 0 987 545 A1**
(43) Veröffentlichungstag der Anmeldung: **22.03.2000**
(21) Anmeldenummer: 98117082.2
(22) Anmeldetag: 09.09.1998
(51) Int. Cl.: G01N 27/406, G01N 27/407

(54) **Röhrchenförmiger Gassensor mit aufgedruckten Sensor- und Heizflächen**

(30) Priorität: 15.09.1997 DE 19740503; 07.10.1997 DE 19744224
(71) Anmelder: Heraeus Electro-Nite International N.V., 3530 Houthalen (BE)
(72) Erfinder: Cappa, Guido, 3530 Houthalen (BE); Jacobs, Paul, 3000 Leuven (BE); Van Geloven, Peter, 3221 Holsbeek (BE)
(74) Vertreter: Kühn, Hans-Christian

(57) **Zusammenfassung**

Die Erfindung betrifft einen Sensor zur Messung von Gaskonzentrationen in einem Gasgemisch mit einem einseitig geschlossenen, in einem Gehäuse angeordneten keramischen, an seiner äußeren Oberfläche mindestens teilweise aus einem Festelektrolytmaterial gebildeten Sensorröhrchen, an dessen Außenseite mindestens ein Sensorkontakt (3,4) und mindestens ein Heizkontakt (2,8,9) mit einer aktiven Heizfläche (8) angeordnet sind. Um einen Gassensor mit kurzer Ansprechzeit zu schaffen, der auch in heißen Abgasen exakt und langzeitstabil funktioniert, sind Sensorkontakt (3,4) und Heizkontakt (2,8,9) auf das Sensorröhrchen gesiebdruckt, wobei mindestens die aktive Heizfläche (8) rotationssymmetrisch um den Umfang des Sensorröhrchens herum ausgebildet ist und wobei der Heizkontakt auf einer auf dem Festelektrolytmaterial aufgebrachten elektrisch isolierenden Schicht (11) derart angeordnet ist, daß er den mindestens einen Sensorkontakt (3,4) nicht überdeckt.

## Beschreibung

Die Erfindung betrifft einen Sensor zur Messung von Gaskonzentrationen in einem Gasgemisch mit einem einseitig geschlossenen, in einem Gehäuse angeordneten keramischen, an seiner äußeren Oberfläche mindestens teilweise aus einem Festelektrolytmaterial gebildeten Sensorröhrchen, an dessen Außenseite mindestens ein Sensorkontakt und mindestens ein Heizkontakt mit einer aktiven Heizfläche angeordnet sind. Desweiteren betrifft die Erfindung ein Verfahren zur Herstellung des Sensors.

Ein derartiger Sensor ist aus DE-A-195 34 918 bekannt. Bei dem hier beschriebenen Sensor sind mehrere Sensorkontakte neben einem Heizkontakt auf einem Festelektrolytröhrchen angeordnet. Die hier offenbarte Anordnung ist gut geeignet für Heizleistungen im mittleren oder unterem Bereich, wobei eine langsame Aufheizung durch den Heizer erfolgt. Bei ungleichmäßiger Aufheizung des Sensorröhrchens besteht die Gefahr, daß die thermomechanischen Spannungen zu einer Zerstörung des Röhrchens führen können oder daß sich die Kontaktschichten von dem Sensorröhrchen lösen. Aus DE-C-30 35 608 ist ein solcher Sensor bekannt, bei dem ein drahtförmiger Heizer auf die Sensoroberfläche gewickelt ist. Dabei ist ein Heizerkontakt durch das Innere des Sensorröhrchens geführt. Eine derartige Anordnung ist relativ aufwendig, um einen gleichmäßigen Halt auf der Sebsoroberfläche zu gewährleisten und den Draht im Innern des Sensorröhrchens zu kontaktieren bzw. zu führen, da dies unter anderem auch Dichtungsprobleme an der Durchführung des Drahtes durch das Sensormaterial mit sich bringen kann.

Aus DE-A-32 25 483 ist es bekannt, Sensorkontakte (Außenelektroden) mittels Tampondruck auf einen zylindrischen Sensorkörper aufzubringen. Tampondruck ist allerdings aufgrund der relativ weichen Farbübertragungselemente relativ ungenau und beispielsweise für Heizerstrukturen völlig ungeeignet, da derartige Heizerstrukturen, wie sie beispielsweise aus DE 195 34 918 bekannt sind, bereits bei geringfügigen Abweichungen der Abmessungen zu einem unkontrollierten Temperaturverhalten führen, da Abweichungen von der vorgegebenen Fläche unmittelbar Abweichungen des Widerstandes nach sich ziehen.

Aus DE-C-36 28 572 ist eine Sensoranordnung bekannt, bei der die Kuppe des Sensorröhrchens aus Festelektrolytmaterial gebildet ist, während ein Heizer auf einem isolierenden Material auf der Mantelfläche angeordnet ist. Diese unterschiedlichen Oberflächenausbildungen des Sensors bringen die in der Druckschrift beschriebenen thermomechanischen Spannungen und damit eine Zerstörungsgefahr des Sensors mit sich.

Ein völlig anderer Sensoraufbau ist aus DE-C-44 01 793 oder aus DE-A-196 46 013 bekannt. Bei diesem Sensoraufbau ist ein Heizstab innerhalb des Sensorröhrchens angeordnet. Die Heizung der Oberfläche des Sensorröhrchens erfolgt über Wärmeleitung von dem Heizstab aus über die Atmosphäre innerhalb des Sensorröhrchens und das Sensorröhrchen selbst bis zu dessen äußerer Oberfläche. Diese Heizung ist daher relativ träge. Durch den hohen thermischen Widerstand zwischen Sensoraußenoberfläche und Heizer ist es unmöglich, die Temperatur der Sensoraußenoberfläche, an der sich die aktiven Sensorkontakte (Sensorelektroden) befinden, genau zu regeln. Außerdem kann bei Abweichungen von einer rotationssymmetrischen Anordnung des Heizstabes innerhalb des Sensorröhrchens zu einer inhomogenen Aufheizung dieses Sensorröhrchens führen. Diese Anordnung hat allerdings den Vorteil, daß Ungenauigkeiten beim Aufdrucken des Heizleiters auf den Heizstab nach dem aus DE-A-32 25 483 bekannten Verfahren relativ unkritisch sind, da der Heizstab selbst massiv und damit relativ stabil ist und eine inhomogene Aufheizung der Oberfläche des Heizstabes durch die erforderliche Wärmeleitung bis zur Oberfläche des Sensorröhrchens nicht zu einer analogen Inhomogenität bei der Aufheizung der Oberfläche des Sensorröhrchens führt.

Darüberhinaus ist es bekannt, zylindrische Substrate durch unterschiedliche Verfahren zu beschichten. Beispielsweise aus EP-A-501 593 oder aus US-A-4 075 968 ist es bekannt, Widerstandsschichten von zylindrischen Schichtwiderständen durch Siebdrucken aufzubringen, wobei der Widerstandswert selbst durch die mäanderförmigen Schichten bestimmt ist. Die inhomogene Verteilung der Widerstandsschichten auf den Substraten ist bei diesen Widerständen unkritisch, da derartige Widerstände niedrige Temperaturen unterhalb von etwa 100° aufweisen, so daß thermomechanische Spannungen innerhalb des Substratmaterials praktisch nicht auftreten.

Aus DE-A1-197 03 636 ist ein Lambda-Sensor bekannt, der ein Sensorröhrchen aufweist, auf dessen Außenseite ein Sensorkontakt angeordnet ist, wobei oberhalb des Sensorkontaktes eine Isolierschicht angeordnet ist, auf der, ebenfalls oberhalb des Sensorkontaktes, ein Heizkontakt angeordnet ist. Diese Anordnung soll ein rasches Aufheizen des Sensors bewirken, so daß der Sensor ohne Verzögerungszeit funktionsfähig ist und Abgaskonzentrationen von Kraftfahrzeugen auch bei noch kaltem Abgas messen kann. Die Anordnung hat allerdings den Nachteil, daß das zu messende Gas, bevor es an den Sensorkontakt gelangt, mit dem metallischen Heizer in Berührung kommt. Dabei reagiert das zu messende Gas mit dem metallischen Heizer und gelangt nicht mehr unverfälscht an den Sensorkontakt. Als Folge dessen weist die Messung ein von den tatsächlichen Verhältnissen im Gas abweichendes Ergebnis auf.

Ausgehend von dem bekannten Stand der Technik liegt der Erfindung die Aufgabe zugrunde, einen Gassensor zu schaffen, der eine kurze Ansprechzeit aufweist und der auch in heißen Abgasen exakt und langzeitstabil funktioniert. Der Erfindung liegt weiterhin die Aufgabe zugrunde, ein zur Herstellung eines derartigen Sensors geeignetes Verfahren anzugeben.

Diese Aufgabe wird für einen Sensor gemäß dem Oberbegriff des Anspruchs 1 erfindungsgemäß dadurch gelöst, daß Sensorkontakt und Heizkontakt auf das Sensorröhrchen gesiebdruckt sind, daß mindestens die aktive Heizfläche rotationssymmetrisch um den Umfang des Sensorröhrchens herum ausgebildet ist und daß der Heizkontakt auf einer auf dem Festelektrolytmaterial aufgebrachten elektrisch isolierenden Schicht derart angeordnet ist, daß er den mindestens einen Sensorkontakt nicht überdeckt. Er ist also auf dem Umfang des Sensors neben dem mindetsens einen Sensorkontakt angeordnet. Es hat sich erwiesen, daß ein derartiger Sensor sehr exakt und gleichmäßig aufheizbar ist und in den beispielsweise in Kraftfahrzeug-Abgasen üblichen Temperaturen von etwa 400°C bis 1000°C einwandfrei arbeitet. Durch die rotationssymmetrische Ausbildung des Heizkontaktes werden thermomechanische Spannungen im Material des relativ dünnen Sensorröhrchens vermieden, die sonst zu einer Zerstörung des Röhrchens führen könnten. Außerdem können Temperaturschwankungen, die zum Beispiel durch Schwankungen der Abgasgeschwindigkeiten bei Kraftfahrzeugen an der Sensoraußenoberfläche entstehen, durch eine solche Heizeranordnung besser verhindert werden. Das Siebdruckverfahren liefert auch bei den hohen Arbeitstemperaturen des Sensors exakt haftende und in ihrer Geometrie genau ausgebildete Kontakte, so daß die Heizleistung exakt bestimmbar ist.

Vorzugsweise sind Heizkontakt und/oder Sensorkontakt mäanderförmig auf dem Sensorröhrchen angeordnet, wobei die Mäanderform in Umfangsrichung um das Sensorröhrchen herum ausgebildet ist. Auf diese Weise ist eine sehr gleichmäßige Ausbildung der Kontakte und damit beispielsweise eine sehr gleichmäßige Erwärmung des Sensorröhrchens möglich. Insbesondere ist es zweckmäßig, daß der Mäander des Heizers aus alternierend in Achsrichtung und in Umfangsrichtung des Sensorröhrchens verlaufenden Abschnitten gebildet ist, wobei die Breite der in Achsrichtung verlaufenden, aktive Heizflächen bildenden Abschnitte geringer ist, als die Breite der in Umfangsrichtung verlaufenden Abschnitte. Vorteilhaft ist es weiterhin, daß die Rotationssymmetrie zwei- bis zehnzählig, insbesondere vierzählig ist, da dadurch eine homogene Sensorausbildung (beispielsweise in Bezug auf die Aufheizung) bei gleichzeitig einfachem Aufbau gegeben ist. Der mindestens eine Sensorkontakt kann vollständig oder teilweise auf dem Festelektrolytmaterial oder auf einem elektrisch isolierenden Material, insbesondere auf einer auf dem Festelektrolytmaterial aufgebrachten elektrisch isolierenden Schicht (Isolierschicht) angeordnet sein. Dadurch können sowohl resistive als auch potentiometrische bzw. amperometrische Sensoren gebildet werden. Vorteilhafterweise ist die elektrisch isolierende Schicht aus Aluminiumoxid oder aus Spinell gebildet, aus Materialien also, die relativ einfach aufzubringen sind und die gleichzeitig die nötige Temperaturfestigkeit und chemische Beständigkeit aufweisen.

Das Sensorröhrchen kann aus einem Grundkörper aus einem hochtemperaturbeständigen Material, insbesondere aus Spinell oder aus Aluminiumoxid gebildet sein, auf dem das Festelektrolytmaterial, beispielsweise Zirkonoxid, angeordnet ist. Das Sensorröhrchen kann auch vollständig aus dem Festelekrolytmaterial gebildet sein.

Die Aufgabe wird für das erfindungsgemäße Verfahren zur Herstellung des erfindungsgemäßen Sensors dadurch gelöst, daß sowohl der Sensorkontakt als auch der Heizkontakt auf das keramische Sensorröhrchens mittels Siebdruckverfahren aufgebracht werden. Dabei hat es sich als zweckmäßig erwiesen, das Heizkontakt und Sensorkontakt nacheinander aufgedruckt werden, wobei insbesondere der Heizkontakt zuerst aufgedruckt werden kann. Es kann allerdings auch vorteilhaft sein, Heizkontakt und Sensorkontakt gleichzeitig aufzudrucken. Hierfür muß die für den Heizkontakt erforderliche elektrisch isolierende Beschichtung Aussparungen aufweisen, in denen der Sensorkontakt unmittelbar auf dem Festelektrolytmaterial des Sensorröhrchens angeordnet werden kann, sofern er nicht ebenfalls auf einer Isolierschicht angeordnet wird. Die elektrisch isolierende Schicht (Isolierschicht) kann vorzugsweise ebenfalls gesiebdruckt sein.

Nachfolgend wird ein Ausführungsbeispiel der Erfindung anhand einer Zeichnung näher erläutert.

In der Zeichnung zeigt
- Figur 1: eine Darstellung des Sensorröhrchens,
- Figur 2: eine Darstellung der Mantelfläche des Sensors,
- Figur 3: eine Schnittdarstellung des Sensors.

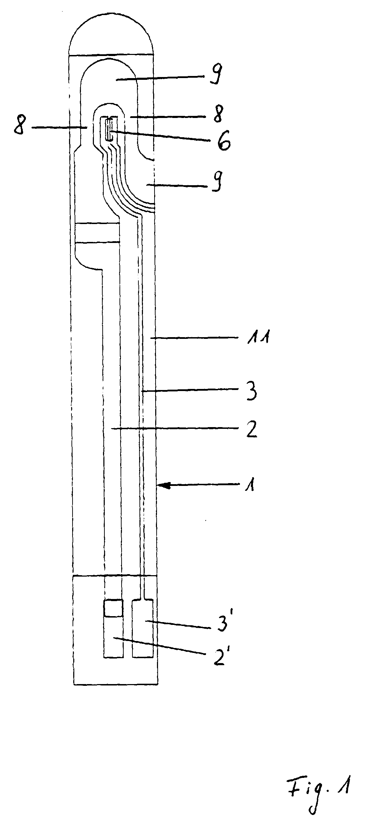

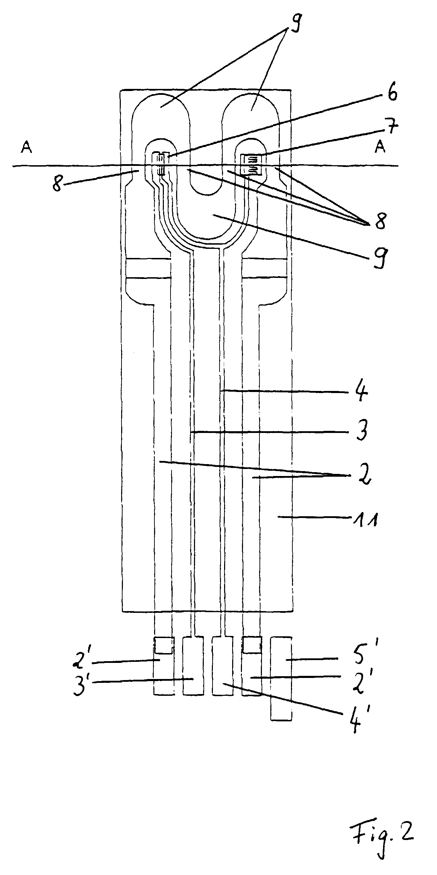

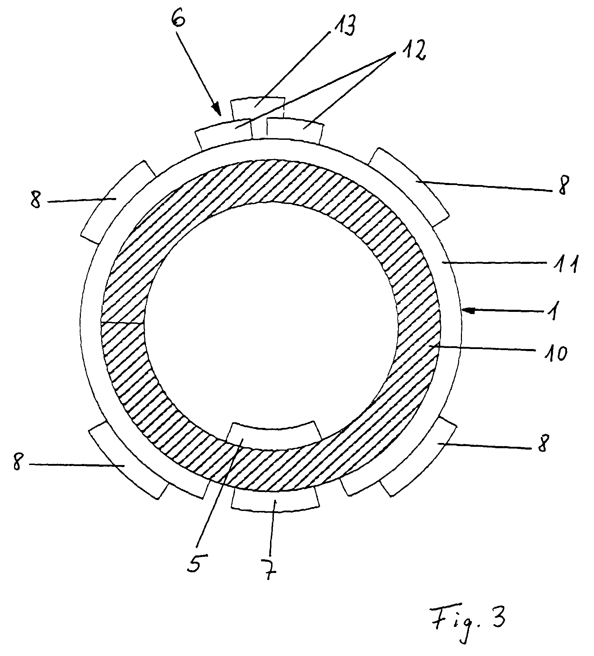

In Figur 1 ist das Sensorröhrchen des erfindungsgemäßen Sensors schematisch dargestellt. Das Sensorröhrchen kann in einer dem Fachmann bekannten Weise in einem Gehäuse angeordnet und kontaktiert sein. Derartige Gehäusungen sind beispielsweise aus DE-A1-197 03 636 bekannt und dort ausführlich beschrieben. Das Sensorröhrchen 1 weist einen Heizkontakt 2 und mehrere Sensorkontakte 3;4 auf. Die Kontakte 2;3;4 sind im wesentlichen längs des Sensorröhrchens 1 geführt. Sie weisen an dem offenen Ende des Sensorröhrchens 1 Kontaktflächen 2';3';4' auf, die der elektrischen Kontaktierung des Sensorröhrchens 1 dienen (siehe auch Figur 2). In der Querschnittsdarstellung in Figur 3 ist eine im Inneren des Sensorröhrchens 1 angeordnete Innenelektrode 5 angeordnet, die an dem offenen Ende des Sensorröhrchens 1 eine Anschlußfläche 5' aufweist.

Das Sensorröhrchen 1 ist einseitig geschlossen und weist als Festelektrolyten 10 Zirkonoxid auf. Es kann vollständig aus Zirkonoxid gebildet sein oder lediglich an seiner äußeren Oberfläche Zirkonoxid in den Bereichen, in denen die aktiven Sensorflächen 6;7 angeordnet sind, aufweisen. Die Sensorkontakte 3;4 weisen an ihrem dem geschlossenen Ende des Sensorröhrchens 1 zugewandten Ende aktive Sensorflächen 6;7 auf. Die Sensorkontakte 3; 4 umfassen also neben den längs des Sensorröhrchens 1 geführten Leiterbahnen auch die Kontaktflächen 3'; 4' und die aktiven Sensorflächen 6; 7. Der Heizkontakt 2 weist in unmittelbarer Nähe der aktiven Sensorflächen 6;7 aktive Heizflächen 8 auf. Diese aktiven Heizflächen 8 weisen einen gegenüber den benachbarten Bereichen 9 Heizkontaktes 2 geringeren Querschnitt auf. Der Heizkontakt 2 umfaßt also neben längs des Sensorröhrchens 1 geführten Leiterbahnen auch die Kontaktfläche 2', die aktive Heizfläche 8 und die benachbarten Bereiche 9. In den benachbarten Bereichen 9 ist der Widerstand des Heizkontaktes wesentlich geringer, so daß die Erwärmung dieser Flächen bei weitem nicht so hoch ist wie die Erwärmung der aktiven Heizflächen 8. Die aktiven Heizflächen 8 sind in Umfangsrichtung des Sensorröhrchens 1 neben den aktiven Sensorflächen 6;7 rotationssymmetrisch angeordnet. Dadurch ist eine gute thermische Ankopplung des Heizkontaktes 2 mit den aktiven Heizflächen 8 an die Sensorkontakte 3;4 gegeben, so daß eine schnelle Aufheizung der aktiven Sensorflächen 6;7 erfolgt. Gleichzeitig wird das gesamte Sensorröhrchen 1 gleichmäßig erwärmt, so daß Spannungen innerhalb des Sensormaterials, die zur Zerstörung des Sensorröhrchens 1 führen könnten, vermieden werden.

Der Heizkontakt 2 ist auf einer auf dem Festelektrolyten 10 des Sensorröhrchens 1 angeordneten Isolierschicht 11 aufgebracht. Die Isolierschicht 11 ist beispielsweise aus Aluminiumoxid gebildet.

Die Sensorkontakte 3;4 mit ihren aktiven Sensorflächen 6;7 können unterschiedlich ausgebildet sein. Beispielsweise kann die aktive Sensorfläche 7 unmittelbar auf dem Festelektrolyten 10 angeordnet sein, das heißt, diesen elektrisch kontaktieren und einen Meßkreis mit der Innenelektrode 5 zur Messung eines Bestandteiles des den Sensor umgebenden Gasgemisches bilden, während die zweite aktive Sensorfläche 6 auf der Isolierschicht 11 angeordnet sein kann, das heißt, sie berührt den Festelektrolyten 10 nicht. Die Isolierschicht 11 kann mittels Siebdruck aufgebracht werden. In Figur 3 (Sensorquerschnitt längs der Linie A-A in Fig.2) ist eine solche Anordnung mit zwei unterschiedlichen Sensorkontakten 3;4 mit entsprechend unterschiedlich ausgebildeten aktiven Sensorflächen 6;7 dargestellt. Die zweite aktive Sensorfläche 6 umfaßt zwei Sensorelektroden 12 und ein die beiden Sensorelektroden 12 verbindendendes aktives Sensormaterial 13. Die Sensorelektroden 12 sind zum Beispiel aus Platin oder Gold gebildet. Das aktive Sensormaterial 13 kann als Festelektrolyt dienen und aus Zirkonoxid gebildet sein; im Falle der Ausbildung als resistiver Sensor kann es aus Zinnoxid, Strontiumtitanat oder Titanoxid gebildet sein. Die aktive Sensorfläche 6 mit dem aktiven Sensormaterial 13 dient der Messung von Kohlenwasserstoffen, Kohlenmonoxid oder Stickoxiden.

Die aktive Sensorfläche 7 ist beispielsweise aus Platin oder einer Mischung aus Platin mit Zirkonoxid gebildet und dient der Messung von Sauerstoff.

Das komplette Sensorröhrchen 1 einschließlich der Sensorkonktate 3;4 und der Heizkontakte 2 kann von einer porösen Schutzschicht aus einem inerten Material, beispielsweise Aluminiumoxid oder Spinell umgeben sein. Diese Schutzschicht ist in den Figuren der Übersichtlichkeit halber nicht dargestellt.

Sowohl die Struktur des Heizkontaktes 2 als auch die Struktur der Sensorkontakte 3;4 werden gesiebdruckt. Der Vorgang des Siebdruckens von Heizkontakten ist dem Fachmann beispielsweise aus DE-A-197 03 636 bekannt. Die Reihenfolge des Siebdruckens der unterschiedlichen Schichten 2;3;4;6;7;8;11;12;13 hängt im wesentlichen von der Materialwahl der Schichten ab, wobei die Materialien mit hohen Sintertemperaturen zuerst gedruckt, getrocknet und gesintert werden. Vor dem Siebdrucken wird der Festelektrolyt 10 mit einer Isolierschicht umgeben, wobei die Isolierschicht nicht an der Stelle angeordnet wird, an der ein Sensorkontakt unmittelbar auf den Festelektrolyten 10 aufgebracht werden soll. Abschließend wird nach dem Siebdrucken eine poröse Schutzschicht auf das komplette Sensorröhrchen einschließlich der Kontakte 2;3;4 aufgebracht.

## Patentansprüche

1. Sensor zur Messung von Gaskonzentrationen in einem Gasgemisch mit einem einseitig geschlossenen, in einem Gehäuse angeordneten keramischen, an seiner äußeren Oberfläche mindestens teilweise aus einem Festelektrolytmaterial gebildeten Sensorröhrchen, an dessen Außenseite mindestens ein Sensorkontakt und mindestens ein Heizkontakt mit einer aktiven Heizfläche angeordnet sind, dadurch gekennzeichnet, daß Sensorkontakt (3;4) und Heizkontakt (2) auf das Sensorröhrchen (1) gesiebdruckt sind, daß mindestens die aktive (8) Heizfläche rotationssymmetrisch um den Umfang des Sensorröhrchens (1) herum ausgebildet ist und daß der Heizkontakt (2) auf einer auf dem Festelektrolytmaterial (10) aufgebrachten elektrisch isolierenden Schicht (11) derart angeordnet ist, daß er den mindestens einen Sensorkontakt (3;4) nicht überdeckt.

2. Sensor nach Anspruch 1, dadurch gekennzeichnet, daß Heizkontakt (2) und/oder Sensorkontakt (3;4) mäanderförmig auf dem Sensorröhrchen (1) angeordnet sind und daß die Mäanderform in Umfangsrichtung um das Sensorröhrchen (1) herum ausgebildet ist.

3. Sensor nach Anspruch 1 oder 2, dadurch gekennzeichnet, daß der Mäander des Heizerkontaktes (2) aus alternierend in Achsrichtung und in Umfangsrichtung des Sensorröhrchens (1) verlaufenden Abschnitten gebildet ist und daß die Breite der in Achsrichtung verlaufenden, aktive Heizflächen (8) bildenden Abschnitte geringer ist als die Breite der in Umfangsrichtung verlaufenden Abschnitte.

4. Sensor nach einem der Ansprüche 1 bis 3, dadurch gekennzeichnet, daß das Sensorröhrchen (1) einen Grundkörper aus einem hochtemperaturbeständigen Material, insbesondere aus Spinell oder aus Aluminiumoxid aufweist, auf dem das Festelektrolytmaterial (10) angeordnet ist.

5. Sensor nach einem der Ansprüche 1 bis 3, dadurch gekennzeichnet, daß das Sensorröhrchen (1) vollständig aus dem Festelektrolytmaterial (10) bebildet ist.

6. Sensor nach einem der Ansprüche 1 bis 5, dadurch gekennzeichnet, daß die Rotationssymmetrie zwei- bis zehnzählig, insbesondere vierzählig ist.

7. Sensor nach einem der Ansprüche 1 bis 6, dadurch gekennzeichnet, daß der mindestens eine Sensorkontakt (3;4) vollständig oder teilweise auf dem Festelektrolytmaterial oder auf einem elektrisch isolierenden Material, insbesondere auf einer auf dem Festelektrolytmaterial (10) aufgebrachten elektrisch isolierenden Schicht (11) angeordnet ist.

8. Sensor nach einem der Ansprüche 1 bis 7, dadurch gekennzeichnet, daß die elektrisch isolierende Schicht (11) aus Aluminiumoxid oder aus Spinell gebildet ist.

9. Verfahren zur Herstellung eines Sensors nach einem der Ansprüche 1 bis 8, dadurch gekennzeichnet, daß der Sensorkontakt (3;4) und der Heizkontakt (2) auf das keramische Sensorröhrchen (1) mittels Siebdruckverfahren aufgebracht werden.

10. Verfahren nach Anspruch 9, dadurch gekennzeichnet, daß Heizkontakt (2) und Sensorkontakt (3;4) nacheinander aufgedruckt werden.

11. Verfahren nach Anspruch 10, dadurch gekennzeichnet, daß der Heizkontakt zuerst aufgedruckt wird.

12. Verfahren nach Anspruch 9, dadurch gekennzeichnet, daß Heizkontakt(2) und Sensorkontakt (3;4) gleichzeitig aufgedruckt werden.

13. Verfahren nach einem der Ansprüche 1 bis 12, dadurch gekennzeichnet, daß die elektrisch isolierende Schicht (11) gesiebdruckt ist.
